# EUROPÄISCHE PATENTSCHRIFT

(11) **EP 0 473 540 B1**
(45) Veröffentlichungstag und Bekanntmachung des Hinweises auf die Patenterteilung: **16.10.1996**
(21) Anmeldenummer: 91810607.1
(22) Anmeldetag: 30.07.1991
(51) Int. Cl.: H01M 8/04, H01M 8/24

(54) **Wärmehaushalt bei Feststoffelektrolyt-Brennstoffzellen**
Heat management in fuel cells with solid electrolyte
Contrôle de l'évacuation de la chaleur dans des piles à combustible à électrolyte solide

(30) Priorität: 27.08.1990 CH 2769/90
(43) Veröffentlichungstag der Anmeldung: 04.03.1992
(73) Patentinhaber: SULZER INNOTEC AG, CH-8401 Winterthur (CH)
(72) Erfinder: Diethelm, Roland, CH-8404 Winterthur (CH)
(74) Vertreter: Heubeck, Bernhard

(56) Entgegenhaltungen:
- EP-A- 0 055 011
- EP-A- 0 133 747
- EP-A- 0 374 636
- EP-A- 0 381 850
- EP-A- 0 437 175
- US-A- 3 394 032
- US-A- 3 523 830
- US-A- 4 169 917
- US-A- 4 476 198
- US-A- 4 490 442
- US-A- 4 490 445
- PATENT ABSTRACTS OF JAPAN vol. 12, no. 385 (E-668)(3232) 14. Oktober 1988 & JP-A- 63 128 559
- PATENT ABSTRACTS OF JAPAN vol. 10, no. 39 (E-381)(2096) 15. Februar 1986 & JP- A-60 195 880
- PATENT ABSTRACTS OF JAPAN vol. 6, no. 155 (E-125)(1033) 17. August 1982 & JP-A-57076766
- PATENT ABSTRACTS OF JAPAN vol. 10, no. 347 (E-457)(2403) 21. Oktober 1986 & JP-A- 61 148 768

## Beschreibung

Die Erfindung betrifft ein Verfahren gemäss Oberbegriff von Anspruch 1, Temperaturausgleichskörper zum Durchführen des Verfahrens sowie Batterien von Feststoffelektrolyt-Brennstoffzellen, die solche Ausgleichskörper aufweisen.

Bei Feststoffelektrolyt-Brennstoffzellen reagiert das Brennstoffgas, das sich vorwiegend aus Wasserstoff und/oder Kohlenmonoxid und/oder Methan zusammensetzt, an der negativen Elektrode (Anode) mit Sauerstoffionen, wobei sich Wasser und/oder Kohlendioxid bildet und Elektronen freigesetzt werden. Der Sauerstoff stammt aus Luft, deren Sauerstoffmoleküle an der positiven Elektrode (Kathode) dissoziiert und ionisiert werden. Die Sauerstoffionen diffundieren durch den Feststoffelektrolyten, der als dünne, gasdichte Schicht zwischen den beiden porösen, schichtförmigen Elektroden liegt, und der bei höheren Temperaturen (über rund 1100 K) oxidionenleitend ist. Es sind verschiedene Typen von Feststoffelektrolyt-Brennstoffzellen bekannt (siehe z.B. Brian Riley "Solid Oxide Fuel Cells - the Next Stage" in Journal of Power Sources, 29 (1990) 223 -237). Die Feststoffelektrolyt-Brennstoffzelle wird im folgenden kurz "Brennstoffzelle" oder nur "Zelle" und das Brennstoffgas kurz "Gas" genannt.

Bei den bekannten Verfahren, Brennstoffzellen zu betreiben, wird die anfallende Reaktionswärme durch die sauerstoffliefernde Luft aufgenommen und ins Abgas abgeführt. Damit in der Brennstoffzelle nicht zu grosse Temperaturdifferenzen auftreten, muss die Luft in grossem Überschuss zugeführt werden. Es ist üblich, fünfmal mehr Luft zu verwenden, als für die Reaktion benötigt würde. Trotz dieses grossen Luftüberschusses beträgt die Differenz zwischen Austritts- und Eintrittstemperatur immer noch rund 200 K, was wegen den auftretenden Wärmespannungen in den keramischen Feststoffelektrolyten zu schwierigen konstruktiven Problemen führt.

Damit von den "elektrochemisch aktiven Strukturen" - das sind die Feststoffelektrolyte mit den beiden Elektrodenschichten - bei der notwendigen hohen Temperatur die Reaktonswärme abgeführt werden kann, muss die Luft vor der Einspeisung in die Brennstoffzellen auf rund 800 Grad Celsius (oder rund 1100 K) aufgeheizt werden. Dies geschieht in einem Rekuperator, in dem Wärme aus dem Abgas rückgewonnen wird. Wegen des verlangten grossen Luftüberschusses sind Rekuperatoren erforderlich, für die ein beachtlicher Anteil der Anlagekosten aufgebracht werden muss.

Es ist Aufgabe der Erfindung, ein Verfahren und Mittel zu schaffen, durch die der Wärmehaushalt in der Brennstoffzellenbatterie so gestaltet werden kann, dass bei möglichst geringem Luftüberschuss möglichst kleine Wärmespannungen in den Feststoffelektrolyten auftreten. Diese Aufgabe wird erfindungsgemäss durch die Merkmale des Anspruchs 1 gelöst.

Die Erfindung weist zwei wesentliche Vorteile auf: Da sich die Brennstoffzellen bei reduziertem Luftüberschuss betreiben lassen, verringern sich die Anlagekosten dank kleineren Rekuperatoren. Es reicht ein zwei- bis dreifacher Luftüberschuss gegenüber dem bisherigen fünffachen aus. Trotz dem reduzierten Luftüberschuss entstehen dank den Temperaturausgleichsköpern in den elektrochemisch aktiven Strukturen Temperaturdifferenzen, die kleiner oder zumindest nicht wesentlich grösser als 20 K sind. Dadurch ergeben sich weniger kritische Wärmespannungen.

Die Ansprüche 2 bis 6 beziehen sich auf Verfahrensweisen, wie der Wärmehaushalt in der Brennstoffzellenbatterie vorteilhaft ausgeführt werden kann.

Im folgenden wird die Erfindung anhand der Zeichnungen näher erläutert. Es zeigen:
- Fig. 1a, 1b: Ausschnitte aus bekannten Brennstoffzellen;
- Fig. 2: ein Schema zum Wärmehaushalt einer Anlage, in der elektrische Energie durch Brennstoffzellen erzeugt wird, wobei die Wärmeabfuhr aus den Brennstoffzellen mittels des erfindungsgemässen Verfahrens erfolgt;
- Fig. 3: einen Ausschnitt aus einer Brennstoffzelle mit erfindungsgemässem Temperaturausgleichskörper;
- Fig.4: ein Diagramm zur Veranschaulichung der Temperatur- und Wärmeflussverhältnisse in einer Brennstoffzelle gemäss Fig. 3;
- Fig. 5: Details zu einem ersten Ausführungsbeispiel der erfindungsgemässen Brennstoffzellenbatterie

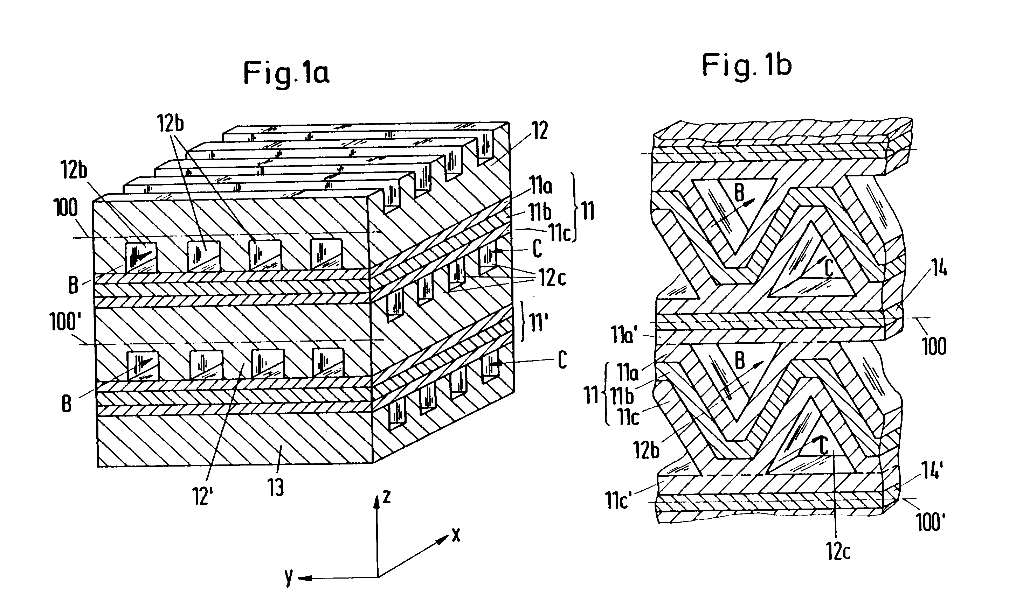

Die Brennstoffzelle der Fig.1a weist elektrochemisch aktive Strukturen 11 auf, die eben und flächig ausgedehnt sind und die sich aus Kathode 11a, Feststoffelektrolyt 11b und Anode 11c aufbauen. Die Luft (Pfeile B) wird durch Kanäle 12b in x-Richtung über die Kathode 11a geleitet, während das Gas (Pfeile C) durch Kanäle 12c in y-Richtung über die Anode 11c geleitet wird. Die Kanäle 12b und 12c sind nutartige Rinnen auf den beiden Seiten der sogenannten "bipolaren Separatorplatte" 12. Diese Separatorplatte 12 ist elektrisch leitend.

Die Brennstoffzellenbatterie gemäss Fig.la besteht aus einem Stapel von Separatorplatten 12, 12' und elektrochemisch aktiven Strukturen 11, 11', die alternierend in z-Richtung aufeinander geschichtet sind und die alle die gleiche rechteckige Fläche (Flächeninhalt F) aufweisen. An den vier zur z-Richtung parallelen Seiten des Stapels sind nicht dargestellte Verteiler und Sammler für die Luft beziehungsweise das Gas angeordnet. An der untern und entsprechend an der obern Seite wird der Stapel durch eine Endplatte 13 abgeschlossen. Der in der Batterie erzeugte elektrische Strom fliesst in z-Richtung; er ist proportional zur Fläche F. Die Batteriespannung ist proportional zur Anzahl der Zellen, wobei eine Zelle die von den beiden strichpunktierten Linien 100 und 100′ begrenzte Zone umfasst.

Bei der Brennstoffzellenbatterie der Fig.1b, ebenfalls ein Zellenstapel, sind die elektrochemisch aktiven Strukturen 11 auch flächig ausgedehnt; sie sind aber quer zu einer Richtung (der x-Richtung) gewellt, wodurch sich parallel verlaufende Luftkanäle 12b und Gaskanäle 12c ergeben. Auf der Struktur 11 sind beidseitig Schichten 11a′ und 11c′ aus Elektrodenmaterial - entsprechend der anliegenden Elektrode - angefügt, wodurch die Kanäle 12b und 12c rohrartig werden. Benachbarte Zellen, deren Grenzlinien 100 oder 100′ wiederum strichpunktiert markiert sind, weisen elektrisch leitende Zwischenschichten 14, 14′ auf. Da alle Kanäle parallel verlaufen, müssen die Verteiler und Sammler für die Luft und das Gas auf den gleichen Stapelseiten (senkrecht zur x-Richtung) angeordnet werden, was gegenüber der Kreuzstromvorrichtung gemäss Fig.1a eine etwas umständlichere Konstruktion bedingt.

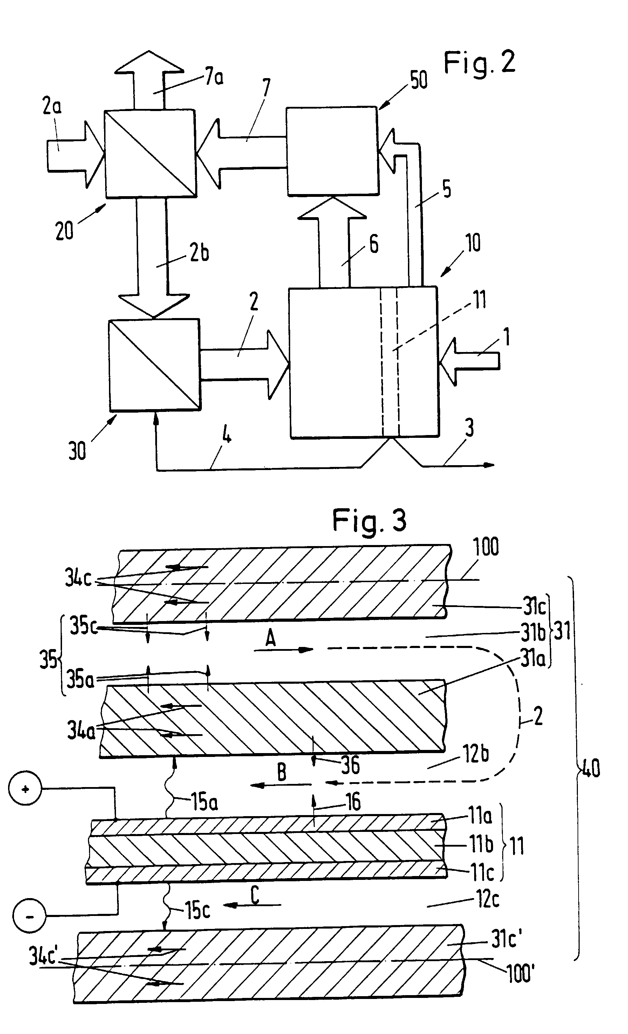

Das erfindungsgemässe Verfahren betrifft auch Brennstoffzellen mit flächig ausgedehnten elektrochemisch aktiven Strukturen, wie sie bei den eben beschriebenen Brennstoffzellen vorliegen. Dieses Verfahren hängt mit dem Wärmehaushalt der Brennstoffzelle zusammen, auf den anhand der Fig.2 zunächst näher eingegangen werden soll:

In der Brennstoffzelle 10 wird das Gas 1 und der Sauerstoff der Luft 2 an den Elektroden der elektrochemisch aktiven Struktur 11 zur Reaktion gebracht, wobei die chemische Energie in elektrische Energie 3 und Wärme 4 übergeht. Bei einer sehr guten Brennstoffzelle entsteht etwa gleich viel von beiden Energiearten. Das verbrauchte Gas 5, von dem etwa 15 % noch nicht oxidiert ist, gelangt zusammen mit der aus der Brennstoffzelle austretenden Luft 6, deren Temperatur rund 800 Grad Celsius beträgt, in einen Nachbrenner 50, wo Abgas 7 mit einer Temperatur von beispielsweise 1000 Grad entsteht. Mit dem heissen Abgas 7 wird in einem Rekuperator, dem "externen Rekuperator" 20, die Frischluft 2a auf rund 600 Grad erwärmt; das dabei teilweise abgekühlte Abgas 7a kann einem andern Heizzweck zugeführt werden. Die erwärmte Frischluft 2b wird im "internen Rekuperator" 30, dem die erfindungsgemässen Temperaturausgleichskörper zugehören, mit der Reaktionswärme 4 auf praktisch Reaktionstemperatur erhitzt und in diesem Zustand der Kathode zugeführt.

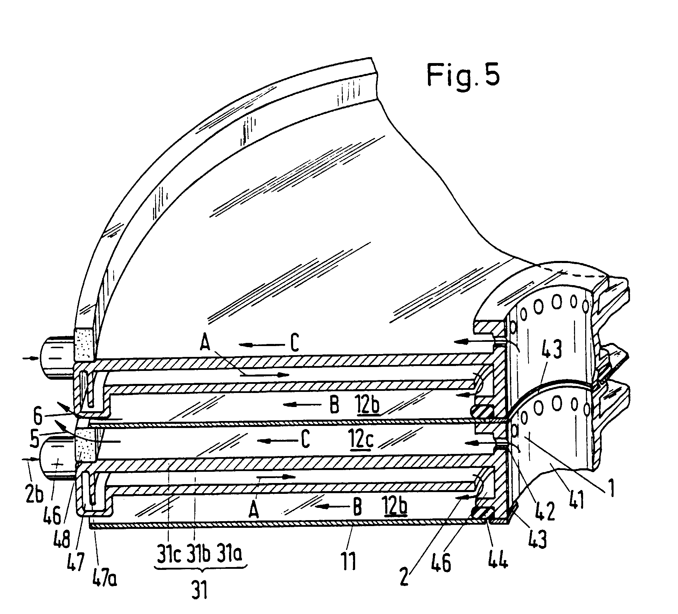

Die im externen Rekuperator 20 vorgewärmte Frischluft 2b passiert beim Eintritt in die Brennstoffzelle 10 Wärmetauscherelemente, wie sie als Ausführungsbeispiel weiter unten im Zusammenhang mit der Fig.5 beschrieben werden. Diese Wärmetauscherelemente werden durch Wärme aus den Temperaturausgleichskörpern gespiesen, wobei sie die Luft 2b weiter auf etwa 700 Grad erhitzen. Die Luft 2b gelangt dann in Kontakt mit den Ausgleichskörpern, wodurch sich ihre Temperatur weiter erhöht. Die dabei auftretenden Wärmeflussverhältnisse werden anhand der Fig.3 erläutert.

Die in Fig.3 ausschnittsweise dargestellte Brennstoffzelle 40 mit dem Temperaturausgleichskörper 31 könnte beispielsweise in einer Brennstoffzellenbatterie gemäss Fig.5 realisiert sein. Der Ausgleichskörper 31 besteht aus zwei parallelen Platten 31a und 31c, wobei die Platte 31c beziehungsweise die entsprechende Platte 31c′ der benachbarten Zelle Trennwände der Brennstoffzellen bilden. Die Mittellinien 100 und 100′ dieser Trennwände sind die Grenzen der Brennstoffzelle 40. Mit dem Pfeil A ist die Luft bezeichnet, die nach den nicht dargestellten Wärmetauscherelementen bei den Lufteintrittsstellen der Brennstoffzelle im Hohlraum 31b zwischen den beiden Platten 31a und 31c strömt und dabei praktisch auf Reaktionstemperatur erhitzt wird. Die so erhitzte Luft wird in den Kathodenraum 12b zwischen elektrochemisch aktiver Struktur 11 und Platte 31a geleitet und strömt dort gemäss Pfeil B entlang der Kathode 11a. Der Pfeil C bedeutet den Gasstrom im Anodenraum 12c entlang der Anode 11c. Angetrieben durch die elektrochemische Reaktion wandern Sauerstoffionen von der positiven Seite (Pluszeichen) durch den Feststoffelektrolyten 11b zur negativen Seite (Minuszeichen) und erzeugen so die elektromotorische Kraft der Brennstoffzelle.

Durch verschiedene Pfeile sind in Fig.3 die Wärmetransportverhältnisse in der Brennstoffzelle 40 angegeben: Wärmeleitung 34a, 34c und 34c′ in den Platten 31a, 31c bzw. 31c′ in Richtung Lufteintrittsstelle; Wärmeübergang 35a, 35c von Platte 31a bzw. 31c auf Luftstrom A; Wärmeübergang 36, 16 von Platte 31a bzw. Kathode 11a auf Luftstrom B; Wärmestrahlung 15a von Kathode 11a auf Platte 31a und Wärmestrahlung 15c von Anode 11c auf Platte 31c′ (eine entsprechende Wärmestrahlung absorbiert die Platte 31c aus der benachbarten Zelle).

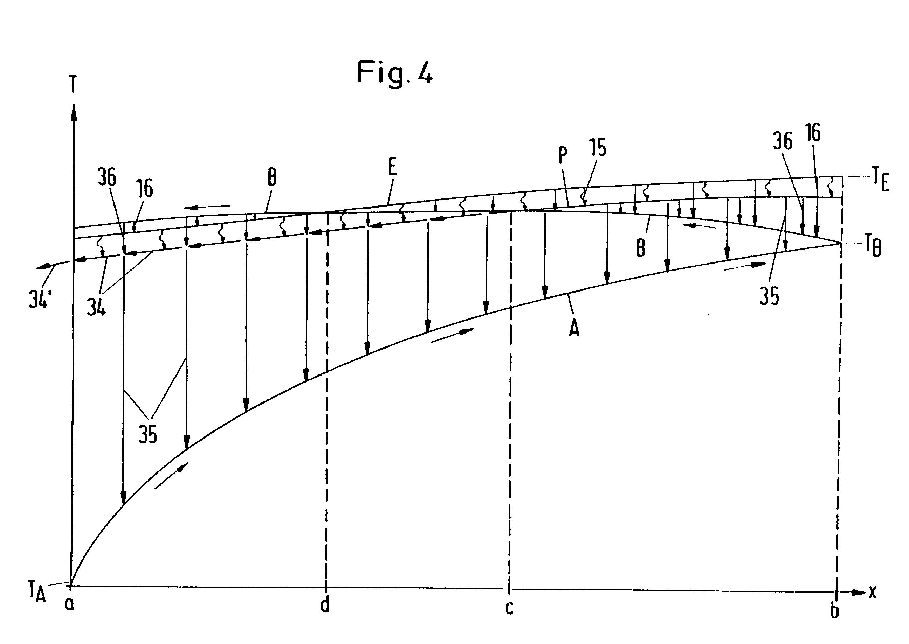

Die bei der elektrochemischen Reaktion entstehende Wärme wird hauptsächlich indirekt über die Ausgleichskörper 31 auf die Luft durch Wärmeleitung übertragen. Zuvor wird die Reaktionswärme hauptsächlich durch Wärmestrahlung an die Ausgleichskörper 31 abgegeben; die Wärmeleitung in und durch den Kathodenraum 12b beziehungsweise den Anodenraum 12c trägt zu dieser Wärmeabführung nur unwesentlich bei. Diese Feststellung hat sich anhand von Modellrechnungen ergeben. In Fig.4 ist das Ergebnis einer solchen Rechnung wiedergegeben. Die weitere Diskussion der Wärmetransportverhältnisse wird nun bezüglich dem Diagramm der Fig.4 fortgesetzt.

Die vier Kurven A, B, P und E im Diagramm der Fig.4 zeigen die Temperaturverläufe im Hohlraum 31b des Ausgleichskörpers 31 (Kurve A), im Kathodenraum 12b (Kurve B), in den Platten 31a, 31c des Ausgleichskörpers 31 (Kurve P) und in der elektrochemisch aktiven Struktur 11 (Kurve E). Die Kurve P gilt dabei der Übersichtlichkeit halber für beide Platten 31a und 31c. (Die beiden Platten weisen Temperaturverläufe auf, die sich nur wenig unterscheiden.) Die x-Achse ist entlang der Strömungsrichtung der Luft im Hohlraum 31b (Pfeil A) gewählt. Der Punkt a auf der Abszisse bedeutet die Lufteintrittsstelle des Ausgleichskörpers 31 und der Punkt b die Umkehrstelle, wo die Luft aus dem Hohlraum 31b in den Kathodenraum 12b umgeleitet und dort Richtung Eintrittsstelle zurückgeführt wird. Mit den kleinen Pfeilen entlang den Kurven A und B ist die Strömungsrichtung der Luft angedeutet.

Die Pfeile zwischen den in Fig.4 angegebenen Kurven stellen die Wärmetransportverhältnisse entsprechend den Pfeilen in Fig.3 dar. Die linke Hälfte der Kurve P ist in Pfeile 34 aufgelöst, durch welche die Wärmeleitung entlang des Ausgleichskörpers angedeutet ist (entsprechend den Pfeilen 34a und 34c). Der Pfeil 34′ bedeutet dabei den Wärmestrom, der durch die Wärmetauscherelemente am Lufteintritt aufgenommen wird. Dieser Wärmestrom 34′ entspricht dem Anteil der Reaktionswärme, der vom Ausgleichskörper 31 indirekt auf die Luft 2b (Fig.2) übertragen wird. Bei der dem Diagramm zugrunde liegenden Modellrechnung sind die Anteile der indirekt und direkt übertragenen Wärmemengen als beinahe gleich gross gewählt worden, was einer optimalen Betriebsweise entspricht.

Nach der indirekten Wärmeübertragung tritt die Luft mit der Temperatur T_{A} (973 K) in den Hohlraum 31b ein, wo sie durch die direkte Wärmeübertragung vom Ausgleichskörper 31 auf die Temperatur T_{B} (1068 K) erhitzt wird. Diese Temperatur T_{B} liegt nur rund 20 K unter der Reaktionstemperatur T_{E}. Im Kathodenraum 12b verändert sich die Lufttemperatur (Kurve B) nur noch wenig. Zunächst - bei abnehmenden x-Werten - steigt sie noch an, bleibt dann praktisch konstant und verringert sich schliesslich wieder etwas. Im Intervall zwischen den Punkten b und c nimmt die Luft Wärme von der Kathode 11a (Pfeile 16) und von der Platte 31a (Pfeile 36) auf; zwischen c und d nimmt die Luft einerseits Wärme von der Kathode 11a auf und gibt Wärme an die Platte 31a ab; zwischen d und a gibt die Luft sowohl an die Kathode 11a wie auch an die Platte 31a Wärme ab.

Die elektrochemische Reaktion findet bei rund 1100 K statt, und es wird dabei eine thermische Leistung - bezogen auf beide Elektrodenoberflächen - von rund 1 kW/m² freigesetzt. Wegen der hohen Reaktionstemperatur genügt eine Temperaturdifferenz von rund 5 K, die Reaktionswärme durch Wärmestrahlung von den Elektroden 11a und 11c auf die benachbart angeordneten Platten 31a bzw. 31c′ der Temperaturausgleichskörper 31 zu übertragen. Diese Temperaturdifferenz ist in Fig.4 zu gross gezeichnet. Da zwischen den Elektroden und der angrenzenden Luft bzw. dem angrenzenden Gas nur ein relativ geringer Wärmeaustausch stattfindet, ist es beispielsweise möglich, dass die Lufttemperatur höher als die Elektrodentemperatur ausfallen kann: siehe Intervall zwischen a und d im Diagramm der Fig.4.

Gemäss der Modellrechnung beträgt die maximale Temperaturdifferenz in der elektrochemisch aktiven Struktur 11 17 K; der Abstand zwischen den Extremalstellen beträgt 4 cm. Der Temperaturgradient - rund 4 K/cm - ist daher wesentlich kleiner als in bisher bekannten Brennstoffzellen, wo er in der Grössenordnung von 50 K/cm liegt. Somit ergeben sich mässigere Thermospannungen, denen die Feststoffelektrolyte 11b eher widerstehen.

Bezüglich den Temperaturgradienten muss folgende Voraussetzung gelten: Damit nicht an einzelnen Stellen der keramischen Elektrolytschichten zu grosse Temperaturgradienten auftreten, müssen die Temperaturausgleichskörper eine genügend weit ausgedehnte Oberfläche aufweisen, über die sie überall die von den Elektroden emittierte Wärmestrahlung absorbieren können, und sie müssen über ihre gesamte Ausdehnung einen temperaturausgleichenden Wärmetransport ermöglichen. Mit Vorteil werden die Ausgleichskörper 31 aus einer Metalllegierung gefertigt, die bis zu einer Temperatur von 1100 K bei Anwesenheit von Sauerstoff beständig ist. Sie können aber auch aus keramischem Material, das weniger gut wärmeleitend ist, hergestellt werden; nur müssen dann die Platten 31a und 31c ausreichend dick sein, damit der Temperaturausgleich gewährleistet ist.

Bei der Diskussion des Wärmehaushalts der Brennstoffzelle anhand der Fig.2 ist auf den Beitrag des Gasstroms nur hinsichtlich der Nachverbrennung eingegangen worden. Der Beitrag zum Wärmehaushalt bezüglich dem Transport von sensibler Wärme hat nur geringes Gewicht, da die vom Gasstrom mitgeführte Wärmemenge - bei gleichen Temperaturdifferenzen verglichen - mehr als eine Grössenordnung kleiner ist als beim Luftstrom. Das Gas wird innerhalb der Batterie auf dem Weg zu den einzelnen Brennstoffzellen schon beträchtlich vorerwärmt. Um eine noch bessere Vorerhitzung des Gases zu erhalten, können ähnlich wie für die Luft die Gaseintrittsstellen als Wärmetauscherelemente ausgebildet sein, die ebenfalls die zu übertragende Wärme aus den Temperaturausgleichskörpern beziehen.

In Fig.5 ist ein sektorförmiger, zwei Zellen umfassender Ausschnitt aus einer zentralsymmetrischen Brennstoffzellenbatterie dargestellt. Die Vorgänge hinsichtlich elektrochemisch aktiver Struktur 11 und Ausgleichskörper 31 sind schon anhand der Fig.3 erläutert worden. Es folgt nun eine ergänzende Beschreibung:

Das Gas 1 wird durch ein zentrales Rohr 41 über eine Vielzahl von Löchern 42 in den Anodenraum 12c eingespiesen. Das zentrale Rohr 41 setzt sich aus Segmenten zusammen, zwischen denen elektrisch isolierende Ringe 43 eingelegt sind. Ein Dichtungsring 44 sorgt im zentralen Bereich für eine gasundurchlässige Trennung zwischen benachbarten Zellen. Das zentrale Rohr 41 erweist sich als Wärmetauscher, durch den Wärme aus dem Ausgleichskörper auf das Gas 1 übertragen wird. Je feiner die Löcher 42 gewählt werden, desto besser ist die Vorerhitzung des in die Zellen eingespiesenen Gases 1.

Die im externen Rekuperator vorerwärmte Frischluft 2b gelangt über den Stutzen 46 in einen Ringkanal 47, wo sie über den Umfang der Brennstoffzelle verteilt wird und dabei gleichzeitig durch Wärme, die aus dem Ausgleichskörper 31 radial zugeleitet wird, zusätzlich erhitzt wird. Die Verteil- und Wärmetauschfunktion kann durch zusätzliche Elemente, wie beispielsweise die in Fig.5 dargestellte Rippe 47a verbessert werden. Statt einem Stutzen 46 können selbstverständlich auch mehrere über den Umfang der Brennstoffzelle angeordnet sein. Der Ringkanal 47 ist das oben erwähnte Wärmetauscherelement an der Lufteintrittsstelle.

Nach der weitern Erhitzung im Hohlraum 31b tritt die Luft 2 zentral durch die ringförmige Lücke 46 in den Kathodenraum 12b ein. Am äussern Umfang des Zellenstapels verlassen die verbrauchte Luft 6 und das verbrauchte Gas 5 die Brennstoffzellen. In einem Ringraum zwischen einer nicht dargestellten Gehäusewand und der Oberfläche des Zellenstapels kann die Nachverbrennung der Luft 6 und des Gases 5 unmittelbar nach deren Austritt aus den Brennstoffzellen erfolgen. Das Gas 5 und die Luft 6 können natürlich auch separat gesammelt werden und erst dann extern nachverbrannt werden.

Bei Zuführung zu den Stutzen 46 durchquert die Frischluft 2b heisse Bereiche an der Oberfläche des Zellenstapels, wobei eine zusätzliche Wärmeaufnahme stattfindet. Es ist empfehlenswert, bei allen Zellen für gleiche Eintrittstemperaturen zu sorgen, damit in Achsrichtung des Stapels möglichst keine Temperaturgradienten auftreten. Diese Forderung lässt sich dadurch erfüllen, dass die Zuleitungsrohre in den heissen Bereichen so ausgelegt und angeordnet werden, dass für alle die zusätzliche Wärmeaufnahme gleich oder zumindest angenähert gleich gross ist. Eine andere Möglichkeit besteht darin, mittels Wärmedämmungen diese zusätzliche Wärmeaufnahme klein zu halten.

Beim Ausführungsbeispiel gemäss Fig.5 bildet der Ausgleichskörper 31 zusammen mit einem Segment des zentralen Rohrs 41, mit dem Stutzen 46 und mit dem Ringkanal 47 ein zusammenhängendes Gas- und Lufteinspeiseelement der Brennstoffzellenbatterie.

## Patentansprüche

1. Verfahren zum Abführen der Reaktionswärme aus einer Batterie von Feststoffelektrolyt-Brennstoffzellen mittels der sauerstoffliefernden Luft, wobei die Zellen aufeinander geschichtete Lagen eines Stapels bilden und die elektrochemisch aktiven Strukturen der Zellen zusammenhängende, in den Lagen flächig ausgedehnte Elemente sind,
dadurch gekennzeichnet, dass die bei der elektrochemischen Reaktion anfallende Wärme grösstenteils auf gut wärmeleitende Temperaturausgleichskörper übertragen wird, dass ein erster Teil der durch die Ausgleichskörper aufgenommenen Wärme durch indirekte Wärmeübertragung an die eingespiesene Luft, nämlich durch Wärmeleitung in den Ausgleichskörpern zu Wärmetauscherelementen an den Lufteintrittsstellen der Brennstoffzellen, welche an der Peripherie des Zellenstapels angeordnet sind, und ein zweiter Teil durch direkte Wärmeübertragung von den Ausgleichskörpern an die Luft abgegeben wird, bevor die Luft den positiven Elektroden der elektrochemisch aktiven Strukturen zugeführt wird.

2. Verfahren nach Anspruch 1, dadurch gekennzeichnet, dass mit der sauerstoffliefernden Luft der Reaktion Sauerstoff mit einem höchstens dreifachen Überschuss zugeführt wird.

3. Verfahren nach einem der Ansprüche 1 oder 2, dadurch gekennzeichnet, dass die beiden Wärmemengen, die bei der Vorerhitzung der Luft durch den Ausgleichskörper mittels direkter beziehungsweise indirekter Wärmeübertragung an die Luft abgegeben werden, im wesentlichen gleich gross sind.

4. Verfahren nach einem der Ansprüche 1 bis 3, dadurch gekennzeichnet, dass jeder Brennstoffzelle der Batterie Luft mit im wesentlichen gleicher Temperatur zugeführt wird.

5. Verfahren nach einem der Ansprüche 1 bis 4, dadurch gekennzeichnet, dass ein dritter Teil der durch die Ausgleichskörper aufgenommenen Reaktionswärme an Wärmetauscherelemente bei den Gaseintrittsstellen geleitet wird, um das Brennstoffgas vorzuwärmen.

6. Verfahren nach einem der Ansprüche 1 bis 5, dadurch gekennzeichnet, dass die Luft durch die direkte Wärmeübertragung von den Temperaturausgleichskörpern bis rund 20 K unter die Reaktionstemperatur (T_{E}) erhitzt wird.

## Claims

1. A process for dissipating the heat of reaction from a battery of solid electrolytic fuel cells by means of the air providing the oxygen supply, whereby the cells form layers of a stack layered one on the another and the electrochemically active structures of the cells are cohesive elements extended flat in the layers,
**characterised in that** the heat produced during the electrochemical reaction is to a large extent transferred to temperature equalising members which are good conductors of heat,
**in that** a first part of the heat absorbed by the equalising members is emitted by indirect heat transfer to the introduced air, i.e by heat conduction in the equalising members to heat exchange elements at the air inlet points of the fuel cells, which are disposed at the periphery of the cell stack, and a second part is emitted by direct heat transfer from the equalising members to the air, before the air is supplied to the positive electrodes of the electrochemically active structures.

2. A process according to Claim 1,
**characterised in that** oxygen having at most a threefold excess is supplied with the air supplying oxygen for the reaction.

3. A process according to one of Claims 1 to 2,
**characterised in that** the two volumes of heat, which, when the air is preheated by the equalising members, are emitted by means of direct or respectively indirect heat transfer to the air, are substantially the same size.

4. A process according to one of Claims 1 to 3,
**characterised in that** air of at least roughly the same temperature is supplied to each fuel cell of the battery.

5. A process according to one of Claims 1 to 4,
**characterised in that** a third part of the heat of reaction absorbed by the compensating members is conveyed to heat exchange elements at the gas inlet points so as to preheat the fuel gas.

6. A process according to one of Claims 1 to 5,
**characterised in that** the air is heated by direct heat transfer from the temperature equalising members to approximately 20 K below the reaction temperature (T_{E}).

## Revendications

1. Procédé pour dissiper la chaleur de réaction d'une batterie de piles à combustible à électrolyte solide au moyen d'air fournissant de l'oxygène, les piles formant des couches superposées d'un empilement, et les structures à action électrochimique des piles étant des éléments accolés s'étendant à plat dans les couches, caractérisé en ce que la chaleur dégagée lors de la réaction électrochimique est transférée en majeure partie à des corps de compensation en température à bonne conductivité thermique, en ce qu'une première partie de la chaleur absorbée par les corps de compensation est évacuée par transfert thermique indirect à l'air admis, à savoir par conduction thermique dans les corps de compensation vers des éléments échangeurs de chaleur situés aux points d'entrée d'air des piles à combustible, lesdits points d'entrée d'air se trouvant à la périphérie de l'empilement de piles, et une deuxième partie étant évacuée par transfert thermique direct des corps de compensation à l'air avant que l'air ne soit fourni aux électrodes positives des structures à action électrochimique.

2. Procédé selon la revendication 1, caractérisé en ce qu'avec l'air fournissant de l'oxygène, de l'oxygène est amené à la réaction dans une proportion excédentaire au plus égale à trois.

3. Procédé selon l'une des revendications 1 et 2, caractérisé en ce que les deux quantités de chaleur évacuées dans l'air, lors du préchauffage de l'air, par transfert thermique direct et, respectivement, indirect par l'intermédiaire du corps de compensation sont sensiblement égales.

4. Procédé selon l'une des revendications 1 à 3, caractérisé en ce que l'air fourni à chaque pile à combustible de la batterie se trouve sensiblement à la même température.

5. Procédé selon l'une des revendications 1 à 4, caractérisé en ce qu'une troisième partie de la chaleur de réaction absorbée par les corps de compensation est transmise à des éléments échangeurs de chaleur situés aux points d'entrée de gaz afin de préchauffer le gaz combustible.

6. Procédé selon l'une des revendications 1 à 5, caractérisé en ce que, par le transfert thermique direct à partir des corps de compensation en température, l'air est chauffé à une température inférieure d'environ 20 K à la température de réaction (T_{E}).
